# EUROPÄISCHE PATENTANMELDUNG

(11) **EP 2 431 178 A1**
(43) Veröffentlichungstag der Anmeldung: **21.03.2012**
(21) Anmeldenummer: 11007229.5
(22) Anmeldetag: 06.09.2011
(51) Int. Cl.: B32B 37/12, B32B 7/12

(54) **Verfahren zur Herstellung eines Laminats und dazu gehörige Bogenlaminiermaschine**

(30) Priorität: 16.09.2010 DE 102010037592
(71) Anmelder: Steinemann Technology AG, 9015 St. Gallen (CH)
(72) Erfinder: Walther, Thomas, 9000 St. Gallen (CH)
(74) Vertreter: Arat, Dogan

(57) **Zusammenfassung**

Bei einem Verfahren zur Herstellung eines Laminats, bestehend aus einer Materialbahn (6) und einem bogenförmigen Trägermaterials (10), mittels eines Klebstoffes in einer Bogenlaminiermaschine, die mindestens folgende Aggregate aufweist:
a) eine Entstapelungsvorrichtung (15), in der das bogenförmige Trägermaterial von einem Stapel (17) entnommen und der Bogenlaminiermaschine zugeführt wird,
b) eine Abrollung (4) für die Materialbahn
c) ein Klebstoffbeschichtungswerk (5), das die Materialbahn und / oder das bogenförmige Trägermaterial mit einem UV reaktiven Klebstoff beschichtet,
eine Kaschiervorrichtung (12), die mindestens aus zwei Walzen besteht, in deren Walzenspalt bzw. "Kaschierspalt" die Materialbahn und das bogenförmige Trägermaterial unter Druckeinwirkung mit Hilfe des Klebstoffs zu einem Laminat verbunden wird, soll der UV - Klebstoff ein Klebstoff sein, der nach dem kationischen Reaktionsmechanismus reagiert und eine ausgesprochene Dunkelreaktion bzw. "Post-Curing" aufweist, d.h., dass die durch UV Bestrahlung initierte Polymerisationsreaktion nach dem Wegfall der UV Strahlung sich fortsetzt bis es zu einer Abbruchreaktion kommt,
und
die UV - reaktive Klebstoffschicht auf der Materialbahn und / oder dem bogenförmigen Trägermaterial vor und /oder während des Eintritts der Laminatpartner bzw. der "Materialbahn" oder dem, bogenförmigen Trägermaterial in den Walzenspalt bzw. Kaschierspalt der Bogenlaminiermaschine mit UV - Strahlung zum Starten der Polymerisationsreaktion bestrahlt wird.

## Beschreibung

Die Erfindung betrifft Verfahren zur Herstellung eines Laminats und dazu gehörige Bogenlaminiermaschine

### Stand der Technik

In einer Bogenlaminiermaschine wird eine relativ dünne bahnförmige Folie aus Kunststoffmaterial oder einem anderen Material von einer Rolle endlos abgenommen und in ein Laminierwerk in einen Walzenspalt zwischen einer oberen Folienwalze und einer unteren Bogenwalze geführt. In den Walzenspalt wird gleichzeitig ein zu laminierender Bogen eingeführt und infolge der Druckbeaufschlagung im Walzenspalt das Laminat gebildet. Die Bögen werden unterschuppt mittels eines Bogenanlegers zugeführt, anschließend ausgerichtet und unterlappt, voneinander beabstandet oder "Stoss an Stoss" dem Laminierwerk zugeführt. Vor dem Zuführen in das Laminierwerk können die Bögen ggf. gereinigt werden. Nach dem Laminieren werden die Laminate entsprechend einer Vorgabe getrennt und abgelegt.

Ein satzungsmäßiger Vertreter einer solchen Laminiermaschine ist in der WO 2008/061379 offenbart. Diese Bogenlaminiermaschine weist einen modularen Aufbau auf und ermöglicht verschiedene Verfahren anzuwenden. Bei allen Verfahren, außer dem Thermolaminieren, wird über ein Klebstoffauftragswerk ein Klebstoff auf die Materialbahn aufgetragen, der dazu dient die beiden Laminatlagen miteinander zu verbinden.

Der Begriff Laminatlage bezeichnet eine der Lagen des späteren Laminats, zum Beispiel die Laminatlage Folie auf der Laminatlage Bedruckstoff.

Folgende Klebstofftypen werden vielfältig in Bogenlaminiermaschine eingesetzt, die allerdings für die jeweilige Anwendung ihre eigenschaftspezifischen Einschränkungen aufweisen.

Lösungsmittelfreie Einkomponentenklebstoffe. Die wichtigste Gruppe dieser Klebstoffart bilden Isocyanatprepolymere. Solche 1 K Polyurethan - Klebstoffe werden unter anderem auf breiter Ebene auf den Lotus Kaschiermaschinen der Steinemann Technology AG, St. Gallen, eingesetzt. Die Härtung erfolgt über die Feuchtigkeit, die über die Umgebungsluft aufgenommen wird oder durch die Feuchtigkeit, die von mindestens einer der Laminatlagen bereitgestellt wird. Das Verfahren eignet sich daher in hervorragender Weise für die Lamination von Folie auf Papier oder Karton, da Papier und Karton, da diese Materialien hygroskopische Eigenschaften aufweisen und eine ausreichende Restfeuchte besitzen. Bei der Lamination von zwei nicht oder in einem geringeren Masse hygroskopischen Materialien, wie z.B. Folie auf Folie, ist das Verfahren weniger geeignet. Eine oder beide Laminatlagen müssen dann befeuchtet werden, was in der geringen erforderlichen Menge bei gleichzeitig hohen Produktionsgeschwindigkeiten sich als schwierig erweist. Die aufgesprühte oder vernebelte Feuchtigkeit kann dabei verwirbeln oder unerwünschte Agglomerate bilden. Bei der Lamination von Folie auf Metall ist die Befeuchtung gänzlich unerwünscht, da diese die Korrosion des Metalls bei einem übermäßigen Feuchtigkeitsauftrag fördern kann.

Reaktive Zweikomponentenklebstoffe. Ein Beispiel für solche reaktiven Zweikomponentenklebstoffe sind 2 K Polyurethanklebstoffe. Diese Klebstoffe bestehen aus 2 Komponenten, die möglichst direkt vor dem Auftrag gemischt werden. Diese Klebstoffe eignen sich in hervorragender Weise zum verkleben zweier, nicht hygroskopischer Lagen. Mit der Mischung fängt sofort die Topfzeit oder offene Zeit des Klebstoffs an. Dies hat für die Anwendung in Bogenlaminiermaschinen mit ihren häufigen Produktionsunterbrechungen den Nachteil, dass die Auftragssysteme im Falle eines Maschinenstopps unverzüglich gereinigt werden müssen. Dies hat höhere Rüstzeiten und somit eine geringere Produktivität zur Folge.

Reaktive UV Klebstoffe. Die weitaus größte Gruppe der reaktiven UV Klebstoffe lassen sich der Gruppe der radikalisch härtenden Systeme zuordnen. Bei diesem Prozess zerfallen die verwendeten Photoinitiatoren, unter Einfluss von UV Strahlung, in mehrere Startradikale, die den Ausgangspunkt der Polymerisation darstellen. Die Polymerisation schreitet solange fort, bis die radikalischen Reaktionen terminiert werden oder keine neuen Reaktionspartner mehr gefunden werden. Die Reaktion bleibt solange aufrechterhalten, wie die UV Bestrahlung anhält. Im Falle der Lamination muss daher mindestens einer der Laminatlagen für UV Strahlung transparent sein, durch den die Bestrahlung der zwischen den Laminatlagen befindlichen Klebstoffschicht erfolgt. Dadurch wird die Lamination von den meisten eingefärbten, bedruckten oder strukturierten Folien ausgeschlossen.

Bei kationisch härtenden UV Systemen werden durch den UV -Induzierten Zerfall von Photosensibilisatoren meist starke Säuren gebildet, die als Startreagenzien dienen. Die Reaktionen laufen im Gegensatz zu der radikalischen Aushärtung relativ langsam ab und können bis einige Minuten andauern. Da die Säuren so lange im Klebstoff aktiv sind, bis sie neutralisiert werden, kann die Aushärtung voranschreiten, auch wenn keine Strahlung mehr auf den Klebstoff trifft. Dieser so genannten Post - Curing Prozess, auch Dunkelreaktion genannt, kann sich über lange Zeiträume hinziehen. Diese lange Reaktionszeit bietet die Chance, dass eine Klebstoffschicht mit kationischem Reaktionsmechanismus vor dem Zusammenfügen mit UV - Licht bestrahlt werden kann und anschließend die Laminatpartner zusammengefügt werden können.

Als Härtungsanlagen für UV -härtende Beschichtungen kommen konventionelle UV - Strahlungseinheiten in Betracht. Diese bestehen in der Regel aus einem Gehäuse, einem Reflektor und einer UV - Strahlungsröhre. Die UV - Strahlungsröhre ist in der Regel eine Quecksilber - Mitteldruckdampfröhre. Eine solche konventionelle UV - Strahlungseinrichtung ist unter anderem in der DE 103 33 664 A1 offenbart.

Modernere UV - Härtungsanlagen weisen ein Array von UV - Leuchtdioden (LED) auf, die über die Belichtungsbreite und gegebenenfalls auch hintereinander angeordnet sind. Den Einsatz solcher UV emittierenden Leuchtdioden zum Zwecke der Druckfarbenhärtung in einer Druckmaschine ist unter anderem in der DE 10 2009 045 123 zu finden. Die UV - LED's haben den Vorteil, dass sie keine Wärme emittieren und auch durch die Vielzahl einzeln ansteuerbaren LED'S eine gute Breiten- und Leistungsanpassung erlauben.

In der Patentliteratur ist oftmals der Begriff UV - Trocknungsanlagen anstelle von UV - Härtungsanlagen verwendet, obwohl die UV-Härtung in einem engeren Sinn keine Trocknung, sondern eine Polymerisation (Härtung) darstellt. Die beiden Begriffe sind aber im Sinne der Erfindung als Äquivalent zu betrachten.

Die Erfindung beschreibt eine Verfahren zur Herstellung eines Laminats durch die Verklebung mindestens zweier Laminatlagen, wobei als Klebstoff zum Verbinden der Lagen ein UV - härtender Klebstoff mit einer ausgesprochenen Dunkelreaktion ("Post -Curing") eingesetzt wird. Die kennzeichnenden Merkmale des Verfahrens sind dem Anspruch 1 zu entnehmen. Eine Bogenlaminieranlage zur Durchführung des Verfahrens ergibt sich aus dem Anspruch 7. Sinnvolle Weiterbildungen sind den jeweilig abhängigen Ansprüchen zu entnehmen.

Sinnvolle Weiterbildungen ergeben sich aus den Unteransprüchen.

### Figurenbeschreibung

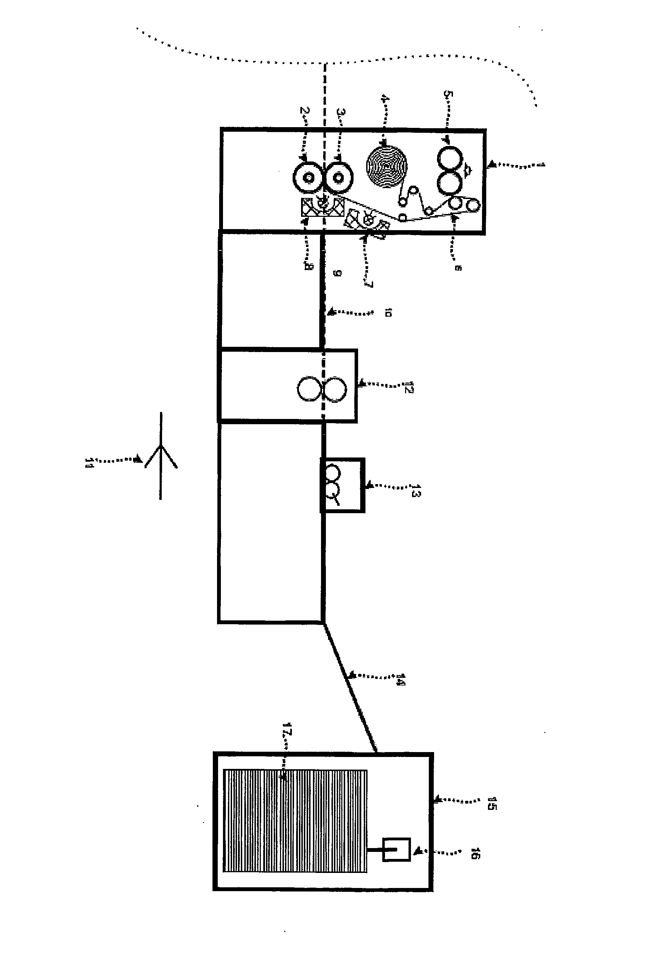

Die erfindungsgemässe Bogenlaminiermaschine weist eine Entstapelungsvorrichtung (15) auf, in der die einzelnen bogenförmigen Trägermaterialien (10) von einem Stapel (17) vereinzelt und der Bogenlaminiermaschine in einem Schuppenstrom oder als Einzelbogen zugeführt werden. Die Figur 1 zeigt als Ausführungsbeispiel einer Entstapelungsvorrichtung (15) einen Bogenanleger, bei dem einzelne Bogen mit einem Bogentrenner (16) von dem Stapel (17) angehoben und nach in Transportrichtung beschleunigt und transportiert werden. Die Bogen werden dann über einen Anlegertisch (14) an die Bogenlaminiermaschine übergeben. Im Sinne der Erfindung kann die Entstapelungsvorrichtung (15) auch eine andere Art von Entstapelungsvorrichtung (15) sein, wie zum Beispiel ein Einzelbogenanleger.

Das bogenförmige Trägermaterial (10) können bedruckte und unbedruckte Papier- oder Kartonbogen sein, ist aber bevorzugt aus nicht oder nur schwach hygroskopischen Material, wie Kunststoffen oder Metallen gebildet. Die Erfindung eignet sich daher in erster Linie für die Laminierung von Metalltafeln oder Kunststoffbogen.

Das bogenförmige Trägermaterial (10) wird auf den Transportstrecken zwischen den einzelnen Bearbeitungsaggregaten (hier zum Beispiel 12,13,1) bevorzugt auf Förderbändern transportiert. Der Transport des bogenförmigen Trägermaterials (10) kann dabei überlappt in der Form eines Schuppenstroms, "Stoss an Stoss" oder voneinander beabstandet (Lücke zwischen den aufeinanderfolgenden Trägermaterialien) erfolgen.

In Transportrichtung (11) nach der Entstapelungsvorrichtung (15) und vor dem Laminierwerk (1) können mehrere Reinigungs- und / oder Vorbehandlungstationen folgen. In Figur 1 sind figürlich eine Doppelbürsteneinrichtung (13) und ein Kalander (12) abgebildet, die zur Reinigung der Bogenoberfläche des bogenförmigen Trägermaterials dienen. Alternativ oder ergänzend können. Eine geeignete Vorbehandlungseinrichtung (hier nicht abgebildet) wäre zum Beispiel eine Corona - Vorbehandlungsanlage, die zur Erhöhung der Oberflächenspannung dient. Hierdurch werden die Haftung der Laminatlagen mittels des Klebstoffs zueinander und die Anhaftung des Klebstoffs verbessert. Reinigungs- und Vorbehandlungsanlagen sind aber im Sinne der Erfindung nicht erfindungswesentlich und nur optional vorgesehen.

Im Folgenden wird die endlose Laminatlage als Materialbahn (6) bezeichnet. Dies ist durchaus in einem erweiterten Sinn zu verstehen, d.h. das Material der Materialbahn kann aus Papier, Karton, Kunststoffmaterial oder metallischen Materialien bestehen. Die Materialbahn (6) kann ein Verbundmaterial oder ein gewebtes Material, zum Beispiel ein Stoffmaterial sein. In den meisten Fällen wird jedoch Kunststofffolie eingesetzt, so dass all diese Materialien und Materialkombinationen unter dem Begriff Materialbahn (6) subsummiert werden.

Das Laminierwerk (1) weist mindestens einen Rollenabwickler (4), der die Materialbahn (6) von einer Folienrolle abwickelt. Nach dem Abwickeln wird die Materialbahn (6) über ein Klebstoffbeschichtungswerk (5) mit einer Klebstoffschicht versehen. Das Klebstoffbeschichtungswerk (5) ist in Figur 1 als ein Walzenwerk ausgebildet, kann aber im Sinne der Erfindung ein beliebiges anderes geeignetes Klebstoffauftragswerk sein. Als Alternative zu dem Walzenauftragswerk des Klebstoffbeschichtungswerks (5) bietet sich unter anderem eine Breitschlitzdüse, Spraydüsen oder ein Kammerrakelwerk mit einer gerasterten Auftragswalze an.

Figürlich nicht dargestellt ist die Alternative das bogenförmige Trägermaterial (10) mit einem Klebstoff zu beschichten. Hierfür könnte zum Beispiel Kalander (12) durch ein Auftragswerk ersetzt werden. Geeignete Auftragswerke sind unter anderem ein Flexoauftragswerk, z.B. mit Kammerrakel und Rasterwalze, oder ein Walzenauftragswerk. Die Beschichtung des bogenförmigen Trägermaterials (10) mit Klebstoff kann alternativ oder ergänzend zu der Beschichtung auf die Materialbahn (6) erfolgen.

Nach dem Beschichten der Materialbahn (6) und/oder des bogenförmigen Trägermaterials (10) mit dem Klebstoff werden diese gemeinsam in den Kaschierspalt eingeführt, wobei die beiden Laminatlagen dort mindestens unter Einwirkung von Druck miteinander verbunden werden. Der Kaschierspalt wird zwischen der Laminierwalze (3) und der Gegendruckwalze (2) gebildet.

Die Klebstoffverbindung muss nicht unmittelbar nach der Lamination im Kaschierspalt nicht zwingend sehr stark haftend sein, der Verbund kann noch leicht lösbar sein.

Erfindungswesentlich ist, dass in dem Klebstoffbeschichtungswerk (5) ein UV- Reaktiver Klebstoff aufgetragen wird, der ein ausgesprochenes Post-Curing Verhalten (Dunkelreaktion) aufweist. Dass heißt die Polymerisation des Klebstoffs schreitet voran, auch wenn die Bestrahlung mit UV - Licht nicht mehr gegeben ist. Geeignete Klebstoffe sind kationisch härtende UV Klebstoffe, die ein starkes Post - Curing und auch eine in Relation zu radikalisch härtenden UV Klebstoffsystemen eine sehr langsame Polymerisation aufzeigen.

Die Polymerisationsreaktion wird angestoßen, indem die Laminatlage, die mit dem UV reaktiven Klebstoff beschichtet ist, vor dem Erreichen des Nips (Berührungspunkt zweier Walzen) mit UV Strahlung beaufschlagt wird. Hierdurch wird eine Polymerisationsreaktion angestoßen, die dann in dem Laminatverbund (nach dem Verlassen des Kaschierspaltes) ohne weitere UV -Strahlungseinwirkung bis zur vollständigen Aushärtung fortschreitet.

Figürlich ist in Figur 1 die Bestrahlung der beschichteten Materialbahn (6) mit UV - Strahlern (7,8). Die UV - Strahler können wie bei dem UV-Strahler (7) gegen die Materialbahn (6) gerichtet sein und / oder wie bei dem UV-Strahler (8) direkt in den Zwickel des Kaschierspalts, der zwischen den Kaschierwalzen (2,3) gebildet wird, strahlen. Diese Position hat den Vorteil, dass unabhängig, ob das bogenförmige Trägermaterial (10) oder die Materialbahn (6) mit Klebstoff beschichtet ist, die Polymerisationsreaktion angestoßen wird. Alternativ (nicht figürlich dargestellt) kann der Strahler auch gegen die Transportebene (9) der bogenförmigen Trägermaterialien (10) gerichtet sein und somit die mit Klebstoff beschichteten bogenförmigen Trägermaterialien (10) im Durchlauf bestrahlen. Der Begriff UV Strahler ist nicht auf eine UV Lampe beschränkt, sondern kann auch eine Vielzahl in einem Gehäuse oder mehreren Gehäusen befindliche UV - Strahler umfassen.

Alternativ kann zu den UV Strahlern auch UV - Leuchtdioden eingesetzt werden. Diese werden über die Breite nebeneinander angeordnet. Zur Leistungssteigerung können sie auch Matrixförmig neben- und hintereinander in einem Array von Leuchtdioden angeordnet sein. UV- LED's haben den Vorteil, dass sie nur sehr wenig Wärme emittieren und somit empfindliche Folienmaterialien weniger beanspruchen. Außerdem sind sie energiesparend, da sie nur während der Produktion schnell eingeschaltet werden können und somit während Produktionsunterbrechungen nur minimal oder keine Energie verbrauchen. Klassisch UV Röhren müssen dagegen während einer Produktionsunterbrechung in einem Stand-by Modus betrieben werden, da sie sich nicht wie die UV - LED'S spontan ein- und ausschalten lassen. Im Stand-by Betrieb wird kontinuierlich Energie verbraucht.

Der Vorteil einer solchen Bogenlaminiermaschine ist, dass auch nicht oder nur gering für UV Strahlung transparente Materialbahnen (6) auf ein bogenförmiges Trägermaterial (10) laminiert werden können. Beispiele für nicht transparente Materialbahnen (6) sind Metall bedampfte Folien, mit einem Druckbild bedruckte Folien, eingefärbte Folien oder transparente Folien mit UV-Absorber. Die Anwendungsbreite der UV - Laminierung wird erweitert.

Kationische UV - Klebstoffe haben weiter den Vorteil, dass sie sich sehr gut verformen lassen. Verpackungen werden oftmals nach dem laminieren noch bedruckt und geprägt, wodurch immer die Gefahr besteht, dass sich das Laminat partiell oder vollflächig löst. Diese Gefahr ist bei kationischen UV - Klebern gegenüber radikalisch aushärtenden Systemen weniger gegeben.

Außerdem weisen kationische UV - Kleber eine sehr gute Endhaftung gegenüber Metallen auf. Daher eignet sich diese Art der Verklebung hervorragend für die Herstellung von laminierten Blechen, z.B. für die Herstellung von Metallverpackungen.

Durch die Erfindung wird die Flexibilität, universelle Anwendbarkeit einer Bogenlaminiermaschine gesteigert. Außerdem weist das Verfahren verfahrenstechnische Vorteile in der Weiterverarbeitung der Laminate auf, die radikalische UV Klebstoffe so nicht erbringen.

### Bezeichnerliste

- 1: Laminierwerk
- 2: Laminierwalze
- 3: Gegendruckwalze
- 4: Folienabrollung
- 5: Klebstoffbeschichtungswerk
- 6: Materialbahn
- 7: UV - Strahler
- 8: UV - Strahler
- 9: Transportebene
- 10: bogenförmiges Trägermaterial
- 11: Transportrichtung
- 12: Kalander
- 13: Doppelbürsteneinrichtung
- 14: Anlegertisch
- 15: Entstapelungsvorrichtung
- 16: Bogentrenner /Saugkopf
- 17: Stapel

## Patentansprüche

1. Verfahren zur Herstellung eines Laminats, bestehend aus einer Materialbahn und einem bogenförmigen Trägermaterials, mittels eines Klebstoffes in einer Bogenlaminiermaschine, die mindestens folgende Aggregate aufweist:
a) eine Entstapelungsvorrichtung, in der das bogenförmige Trägermaterial von einem Stapel entnommen und der Bogenlaminiermaschine zugeführt wird,
b) eine Abrollung für die Materialbahn
c) ein Klebstoffbeschichtungswerk, das die Materialbahn und / oder das bogenförmige Trägermaterial mit einem UV reaktiven Klebstoff beschichtet,
d) eine Kaschiervorrichtung, die mindestens aus zwei Walzen besteht, in deren Walzenspalt bzw. "Kaschierspalt" die Materialbahn und das bogenförmige Trägermaterial unter Druckeinwirkung mit Hilfe des Klebstoffs zu einem Laminat verbunden wird,
**gekennzeichnet dadurch, dass**
der UV - Klebstoff ein Klebstoff ist, der nach dem kationischen Reaktionsmechanismus reagiert und eine ausgesprochene Dunkelreaktion bzw. "Post-Curing" aufweist, d.h., dass die durch UV Bestrahlung initierte Polymerisationsreaktion nach dem Wegfall der UV Strahlung sich fortsetzt bis es zu einer Abbruchreaktion kommt,
und
die UV - reaktive Klebstoffschicht auf der Materialbahn und / oder dem bogenförmigen Trägermaterial vor und /oder während des Eintritts der Laminatpartner bzw. der "Materialbahn" oder dem, bogenförmigen Trägermaterial in den Walzenspalt bzw. Kaschierspalt der Bogenlaminiermaschine mit UV - Strahlung zum Starten der Polymerisationsreaktion bestrahlt wird.

2. Verfahren nach Anspruch 1,
**gekennzeichnet dadurch, dass**
die UV - Strahlungseinrichtung eine UV - Strahlungsröhre, z.B. einen Quecksilberdampfstrahler und mindestens einen Reflektor aufweist.

3. Verfahren nach Anspruch 1,
**gekennzeichnet dadurch, dass**
die UV - Strahlungseinrichtung aus UV - Leuchtdioden gebildet werden, die neben- und gegebenenfalls hintereinander matrixförmig angeordnet sind.

4. Verfahren nach einem der Ansprüche 1 bis 3,
**gekennzeichnet dadurch, dass**
die endlose Materialbahn eine partiell oder vollflächig verringerte Transparenz für UV Licht aufweist.

5. Verfahren nach einem der Ansprüche 1 bis 4,
**gekennzeichnet dadurch, dass**
es sich bei der Materialbahn um eine mit mindestens einem Druckbild bedruckte Materialbahn handelt.

6. Verfahren nach einem der Ansprüche 1 bis 5,
**gekennzeichnet dadurch, dass**
es sich bei dem bogenförmigen Trägermaterial um eine Metalltafel oder einem Kunststoffbogen oder einem Laminat aus verschiedenen Materiallagen handelt.

7. Bogenlaminiermaschine zur Durchführung des Verfahrens nach einem der Ansprüche 1 bis 6,
wobei die Bogenlaminiermaschine mindestens folgende Aggregate aufweist:
a.) eine Entstapelungvorrichtung, in der das bogenförmige Trägermaterial von einem Stapel entnommen und der Bogenlaminiermaschine zugeführt wird,
b.) eine Abrollung für die endlose Materialbahn
c.) ein Klebstoffbeschichtungswerk, das die Materialbahn und / oder das bogenförmige Trägermaterial mit einem UV reaktiven Klebstoff beschichtet,
d.) eine Kaschiervorrichtung, die mindestens aus zwei Walzen besteht, in deren Walzenspalt ("Kaschierspalt") die Materialbahn und das bogenförmige Trägermaterial unter Druckeinwirkung mit Hilfe des Klebstoffs zu einem Laminat verbunden wird,
**gekennzeichnet dadurch, dass**
die Bogenlaminiermaschine mindestens eine UV - Strahlungsvorrichtung aufweist, die mit dem Klebstoff beschichtete Materialbahn und / oder die mit dem Klebstoff beschichte bogenförmige Trägermaterial mit UV - Strahlung beaufschlagt, bevor diese in dem Kaschierspalt zu einem Laminat verbunden werden.

8. Bogenlaminiermaschine nach Anspruch 7,
**gekennzeichnet dadurch, dass**
die UV - Strahlungseinrichtung eine UV - Strahlungsröhre, z.B. einen Quecksilberdampfstrahler und mindestens einen Reflektor aufweist.

9. Bogenlaminiermaschine nach Anspruch 7 oder 8,
**gekennzeichnet dadurch, dass**
die UV - Strahlungseinrichtung aus UV - Leuchtdioden gebildet wird, die neben- und gegebenenfalls hintereinander matrixförmig angeordnet sind.
